# EUROPEAN PATENT APPLICATION

(11) **EP 4 717 228 A1**
(43) Date of publication of application: **01.04.2026**
(21) Application number: 24202619.3
(22) Date of filing: 25.09.2024
(51) Int. Cl.: A61C 17/24, A61C 17/22

(54) **HOLDER FOR A POWERED DRIVEN PERSONAL CARE ITEM, CHARGING SYSTEM AND UNIT COMPRISING SUCH HOLDER**

(71) Applicant: The Procter & Gamble Company, Cincinnati, OH 45202 (US)
(72) Inventor: MÜLLER, Sven, 61476 Kronberg (DE); ROSEMANN, Aljoscha, 61476 Kronberg (DE); ROTH, Corinna, 65824 Schwalbach (DE); WENZLAWIAK, Martin, 60386 Frankfurt am Main (DE)
(74) Representative: P&G Patent Germany

(57) **Abstract**

A holder for a powered driven personal care item is unitarily formed as one piece and is attachable to a charging unit to hold the powered driven personal care item in place during charging. A charging system comprises such a holder and a charging unit. A unit, preferably a display or touch-and-feel unit, comprises such a charging system and a powered driven personal care item.

## Description

### FIELD OF THE INVENTION

The present disclosure is concerned with a holder for a powered driven personal care item, the personal care item being chargeable via a charging unit. The present disclosure is further concerned with a charging system comprising such holder and a charging unit, as well as with a unit, preferably a display unit, comprising such charging system and a powered driven personal care item.

### BACKGROUND OF THE INVENTION

Powered driven personal care items, for example electrical oral care implements, like electrical toothbrushes have gained significant popularity due to their effectiveness in maintaining oral hygiene. Typically, these powered driven/electrical personal care items require periodic recharging, necessitating the use of a charging unit to ensure optimal functionality. Existing charging units available in the market often comprise structural means, such as pins, clamps or brackets, to hold the personal care item in place during the charging process. However, these structural means can be complex, costly, and prone to failure. Moreover, such charging units are considered less appealing to consumers.

To provide consumers with a more appealing design of a charger/charging unit, various design alternatives have been proposed to facilitate the recharging process. One such design involves the use of a charging unit in the form of a disk with a substantially flat surface onto which the personal care item can be placed for charging. Such charger designs are not only appealing to consumers, but they are also generally compatible with a wide range of personal care items/toothbrush models. Such chargers can accommodate personal care items/toothbrushes of different sizes and shapes, making it versatile and suitable for a variety of users.

However, the flat surface of the charging unit may not provide optimal stability for the personal care implement/toothbrush during a charging process. Depending on the design and materials used, the personal care item may not be firmly held in place, resulting in potential movement or displacement during charging. The personal care item/toothbrush may accidentally fall off during the charging process. The absence of specific structural means, such as pins, to secure the toothbrush in place increases the risk of it slipping off the charging unit, potentially leading to damage or inconvenience. Unlike charging units with specific structural means, a disk-shaped charging unit may not provide adequate protection against accidental impacts or bumps. This is in particular true for displays or touch-and-feel stations in retail where such charging units are used. In a retail setting, the lack of protection of the personal care item/toothbrush can become an even more significant concern. In a retail environment, the charging unit may serve a dual purpose, namely as a charger and as a display unit to showcase the personal care item/electrical toothbrushes to potential customers. If multiple customers interact with the display unit, to pick up the personal care item/toothbrush from the charging unit to examine it more closely or test its weight and feel, the risk of accidental displacement is increased. Also, in a busy retail environment, there is a higher likelihood of accidental bumps or collisions with the charging unit. A minor impact could cause the item to fall off the charging unit, resulting in potential damage.

It is an object of the present disclosure to provide a holder for a powered driven personal care item, a charging system and a unit, preferably a display or touch-and-feel unit, which overcomes at least one of the above-mentioned drawbacks, in particular which enables superior stability of the personal care item when placed on the charging unit, and which offers ease of use and broad compatibility.

### SUMMARY OF THE INVENTION

In accordance with one aspect, a holder for a powered driven personal care item is provided, the personal care item being placeable on and chargeable via a charging unit, the holder being unitarily formed as one piece and being attachable to the charging unit to hold the powered driven personal care item in place when the personal care item is placed on the charging unit.

In accordance with one aspect a charging system is provided, the charging system comprising such holder and a charging unit.

In accordance with one aspect a unit, preferably a display or touch-and-feel unit, is provided, the unit comprising such charging system and a powered driven personal care item.

### BRIEF DESCRIPTION OF THE DRAWINGS

The invention is described in more detail below with reference to various embodiments and figures, wherein:
Fig. 1 shows a back view of an example embodiment of a unit comprising a powered driven personal care item, and a charging system, the charging system comprising a charging unit and a holder according to the present disclosure, the holder being attached to the charging unit;
Fig. 2 shows a side view of the unit of Fig. 1;
Fig. 3 shows a perspective view of the unit of Fig. 1,
Fig. 4 shows a perspective view of the charging system of Fig. 1, the charging system comprising a charging unit and a holder according to the present disclosure;
Fig. 5 shows a perspective view of the holder of Fig. 4; and
Fig. 6 shows a back view of the holder of Fig. 4.

### DETAILED DESCRIPTION OF THE INVENTION

A holder according to the present disclosure is specifically designed for a powered driven personal care item, and serves the purpose of securely holding the personal care item in place during a charging process. The personal care item can be placed on and charged through a charging unit to which the holder is attachable. The holder is designed to hold the powered driven personal care item securely in place, and ensures that the personal care item remains stable and properly aligned on the charging unit during charging, minimizing the risk of accidental displacement or damage.

The holder is unitarily formed as a single piece, and manufactured as a singular, integrated structure. A single, integrated structure may ensure structural integrity and durability of the holder. The unitary construction also simplifies the attachment process of the holder to the charging unit, making it user-friendly and efficient. Further, the unitary formation of the holder as a single piece contributes to manufacturing efficiency. It simplifies the production process and reduces manufacturing costs, while ensuring a consistent and reliable product.

The holder's design ensures a secure and stable connection between the personal care item and the charging unit. The holder prevents the personal care item from shifting or falling off during the charging process, thereby providing protection against accidental impacts or falls reducing the risk of damage.

The holder according to the present disclosure offers advantages such as enhanced stability for the personal care item during charging, ease of use, protection of the personal care item, and manufacturing efficiency. By combining these features, the holder provides an improved charging experience for personal care items and ensures their secure positioning and efficient recharging.

In order to hold the powered driven personal care item properly in place during charging, the holder may comprise a substantially circular ring-like structure into which the powered driven personal care item is at least partially insertable. To facilitate easy attachment of the holder to the charging unit, the holder may further comprise an attachment section for attaching the holder to the charging unit. Such attachment section may comprise an adhesive, for example an adhesive tape, for attaching the holder to the charging unit. To conveniently accommodate a charging cable or a power plug, the attachment section may comprise a recess into which such charging cable or a power plug can be inserted. The substantially circular ring-like structure may be connected with the attachment section via a bridge. Such configuration of a holder provides a simple structure, which is easy to manufacture, attach and clean.

Also, such holder is compatible with various personal care items. The holder's design allows for versatility, being able to accommodate products or items of different shapes and sizes. For example, the personal care item may be an electrical oral care implement, e.g. an electrical toothbrush, flosser, toothpick or the like, an electrical shaver or razor, a hair trimmer, epilator, electric facial cleansing brush, an electrical massager, or an electrical nail care device.

The holder can be attached to the charging unit by an adhesive strip or tape. Such strips may have adhesive properties on both sides and can be pre-cut to the desired shape and size. One side of the strip adheres to the holder, while the other side attaches to the surface of the charging unit. Adhesive strips or tapes may provide a convenient attachment method without leaving residue or causing damage to the charging unit.

Alternatively, the holder may be attached to the charging unit by means of glue or other adhesive material to create a bond between the surface of the holder and the surface of the charging unit. The glue or adhesive selected is preferably compatible with both, the material from which the holder is made and the surface material of the charging unit.

The attachment section may comprise gluing spots for gluing the holder to the charging unit. Such gluing spots provide designated areas where adhesive/glue can be applied. The spots provide clear guidance for the application of adhesive/glue, eliminating the need for precise application or guesswork. This feature enhances the user-friendliness of the holder and allows for efficient and convenient attachment.

The glue/adhesive material may be selected from the following list: Cyanoacrylates, polyurethane adhesives, and epoxy resins.

Attaching the holder to the charging unit by gluing may comprise the following steps:
- Surface preparation to ensure that both, the surface of the attachment section of the holder and the contact surface of the charging unit are clean and free from dirt, dust, oils or the like, to promote improved adhesion.
- Adhesive application by applying an appropriate adhesive to either the surface of the attachment section of the holder or the contact surface of the charging unit.
- Bonding by positioning the attachment section of the holder onto the desired location on the charging unit, thereby ensuring proper alignment and contact, optionally applying appropriate pressure to create a strong bond between the holder and the charging unit.
- Curing the adhesive, optionally by maintaining pressure on the bonded surfaces for a specific period of time.

By gluing the holder to the charging unit, a secure attachment can be provided. The adhesive can create a strong bond between the holder and the charger, ensuring that the holder remains securely in place during usage of the personal care item.

The holder may be made from thermoplastic material that offers durability, and resistance to tampering.

Thermoplastic materials are known for their cost-effectiveness in manufacturing processes. They can be easily molded and formed using techniques such as injection molding, which enables high-volume production at relatively low costs. This may make a thermoplastic holders an economical choice for mass production.

Further, thermoplastics offer a wide range of design possibilities due to their ability to be molded into various shapes and sizes. This flexibility allows for the creation of holders with intricate or customized designs, accommodating different personal care item shapes and sizes. Manufacturers can easily modify and iterate on the design to meet specific requirements or incorporate additional features.

Also, thermoplastics are typically lightweight materials, making them suitable for applications where weight reduction is desirable. A lighter holder contributes to a more comfortable user experience, particularly for handheld personal care items. Additionally, lightweight materials can reduce shipping costs and environmental impact during transportation.

Moreover, the thermoplastic material may exhibit excellent durability and resistance to impact, chemicals, and moisture. This ensures that the holder can withstand regular use and environmental conditions, like use in wet conditions, without significant degradation, prolonging its lifespan. Moreover, the thermoplastic material can be engineered to have specific properties, such as antimicrobial properties, enhancing the performance and longevity of the holder. Also, such holder made form thermoplastic material is generally easy to clean, as it can be wiped down or rinsed with water. The non-porous nature of thermoplastics minimizes the absorption of dirt, grime, or bacteria, ensuring hygienic use of the holder for personal care items. If the thermoplastic holder has a non-slip surface, this may provide a comfortable grip for users when handling the holder, enhancing user experience, especially for personal care items that are used with wet hands or in wet environments.

Furthermore, thermoplastics offer a wide range of color options, allowing manufacturers to create visually appealing holders. The ability to incorporate different colors, finishes, or textures enhances the overall aesthetic appeal of the holder, aligning with consumer preferences, the outer appearance of the personal care item to be stored and/or the charging unit, or brand identity.

For example, the holder may be made from acrylonitrile butadiene styrene (ABS) or acrylonitrile styrene acrylate (ASA). ABS and ASA may provide the holder with improved durability and toughness. Such materials can withstand impacts, shocks, and mechanical stresses without significant deformation or damage. This makes ABS and ASA holders suitable for demanding environments or situations where the holder may be subject to rough handling or accidental drops, like in a retail environment or stores. Also, ABS and ASA materials may provide the holder with improved dimensional stability with low levels of shrinkage during a molding process. This means that ABS and ASA holders are less prone to warping or distortion over time, ensuring long lasting functionality.

Alternatively, the holder may be made from a thermoplastic elastomeric material (TPE e.g. TPA, TPC, TPO, TPS, TPV), ethylene-vinyl acetate (EVA), or Nitrile Butadiene Rubber (NBR).

The holder may be made from a material, e.g. thermoplastic material, having a Shore D hardness from about 40 to about 90, or a Shore D hardness from about 50 to about 80. A holder made from a material having a Shore D hardness from about 40 to about 90 possesses a moderate level of hardness. This range strikes a balance between softness and rigidity, providing the holder with desirable properties for its intended use. It offers sufficient flexibility, durability, and resilience and can conform to the shape and contours of different charging units maintaining its shape and providing a secure attachment.

A charging system according to the present disclosure comprises a holder as discussed herein, and a charging unit. The charging unit may comprise a substantially flat surface onto which the powered personal care item can be placed.

Such flat surface is generally easy to clean and maintain. It can be wiped down or cleaned with mild disinfectants, ensuring hygiene and preventing the buildup of dirt or bacteria, promoting a clean and hygienic charging environment for the personal care item. Such flat surface of the charging unit also provides a simple and intuitive solution for positioning the personal care item for charging. Users can easily place the item on the flat surface without the need for complex mechanisms or clamps. This enhances the overall user experience and convenience. Moreover, a charging unit with a flat surface is generally compatible with a wide range of items, e.g. toothbrush models having handles of different thicknesses or shapes. It can accommodate personal care items of different sizes, shapes, and brands, making it versatile and suitable for various users. This eliminates the need for multiple charging units for different items, e.g. toothbrush models, providing convenience and flexibility. Since the flat surface design does not rely on specific structural means to hold an item/toothbrush in place, it can accommodate items/toothbrushes with different charging mechanisms or connector types.

Further, the charging unit may have the form of a substantially flat disk. A charging unit in the form of a disk with a flat surface provides a sleek and minimalistic design, adding to the overall visual appeal of the system or e.g. a toothbrush charging setup. It can complement modern bathroom aesthetics and contribute to a clean and organized appearance.

The charging unit may comprise a permanent magnet or a magnetizable element for magnetic interaction with the powered driven personal care item. The presence of a permanent magnet or magnetizable element in the charging unit enables magnetic interaction with the powered driven personal care item (such as an electrical toothbrush). This magnetic interaction provides an attachment mechanism, ensuring that the personal care item remains in place and correctly positioned during the charging process. It minimizes the risk of accidental displacement, enhancing the stability and reliability of the charging connection. Magnetic attachment also offers a user-friendly and convenient solution. Users can effortlessly position the personal care item on the charging unit, and the magnetic force takes care of correct positioning/final adjustment. This eliminates the need for complex clamps or pins, simplifying the charging process and improving overall user experience. Without physical clamps or pins, there are fewer areas for dust, debris, or moisture to accumulate, making the charging unit easier to clean and maintain. The magnetic interaction between the charging unit and the personal care item helps in aligning the item correctly for charging. The magnetic force guides and holds the item in the proper position, ensuring proper electrical contact between the charging unit and the item's charging contacts. This alignment assistance reduces the chances of misalignment, which could otherwise result in incomplete or inefficient charging. The use of a permanent magnet or magnetizable element in the charging unit allows for compatibility with a wide range of personal care items. Different shapes and sizes of personal care items can be accommodated by adjusting the positioning on the charging unit, leveraging the magnetic interaction. This versatility ensures that the charging unit can be used with various models or brands of personal care items, providing convenience and flexibility for users.

When the attachment section of the holder is attached to the charging unit, a spacing between the charging unit and the substantially circular ring-like structure of the holder may be provided. The spacing between the charging unit and the substantially circular ring-like structure creates a physical gap or distance. The spacing between the charging unit/it's upper flat surface and the holder's circular ring-like structure allows for easier cleaning and maintenance. It provides access to clean the charging unit's surface, remove debris or dust particles, and wipe down the holder without obstruction. The spacing between the charging unit and the holder's circular ring-like structure helps also ensures that the ring-like structure of the holder does not impede the functionality or operation of the charging unit. This prevents any potential interference with charging contacts, electrical connections, or other components of the charging unit, ensuring smooth and uninterrupted charging. Also, the presence of spacing between the charging unit and the holder's circular ring-like structure can contribute to the visual appeal of the overall design. The gap creates a distinct separation between the two components, adding an aesthetic element to the charging setup. It can create an appealing contrast or highlight the individual characteristics of the charging unit and the holder, enhancing the overall aesthetics of the charging system.

The charging unit may have a substantially circular cross-sectional shape with a diameter, and the substantially circular ring-like structure of the holder has a diameter which is smaller than the diameter of the charging unit. The smaller diameter of the holder's ring-like structure can ensure a secure fit of the personal care item within the charging system, minimizing the risk of accidental detachment or displacement. This secure fit provides added protection for the personal care item, reducing the likelihood of damage caused by falling or shifting during charging. Also, the difference in diameter allows for precise alignment of the personal care item on the charging unit. The smaller diameter of the holder's ring-like structure ensures that the personal care item is properly centered and positioned within the charging system/on the charging unit. This alignment can promote optimal electrical contact between the charging unit and the personal care item's charging contacts, ensuring efficient and effective recharging.

A unit according to the present disclosure, for example a display or touch-and-feel unit, comprises a charging system as discussed herein, and a powered driven personal care item.

The following is a non-limiting discussion of an example embodiment of a holder, a charging system comprising such holder attached to a charging unit, and a display/touch-and-feel unit comprising a powered driven personal care item and a charging system in accordance with the present disclosure, where reference to the Figures is made.

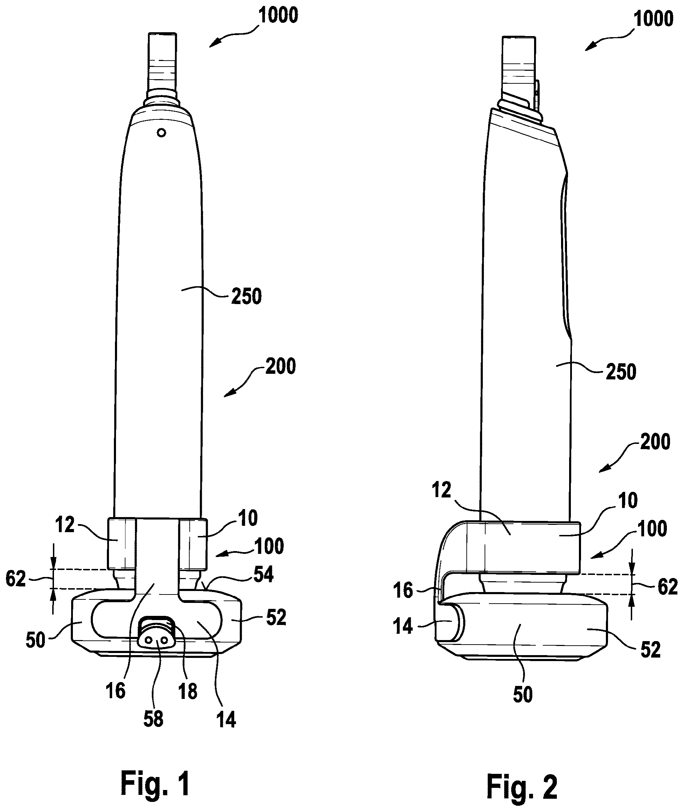

Figs. 1, 2 and 3 show a unit 1000, e.g. a display or touch-and feel unit 1000 which can be used in retail, for example. The unit 1000 comprises a charging system 100 and a powered driven personal care item 200. In the present case, the powered driven personal care item 200 is a powered driven oral care implement 200, e.g. an electrical toothbrush 200.

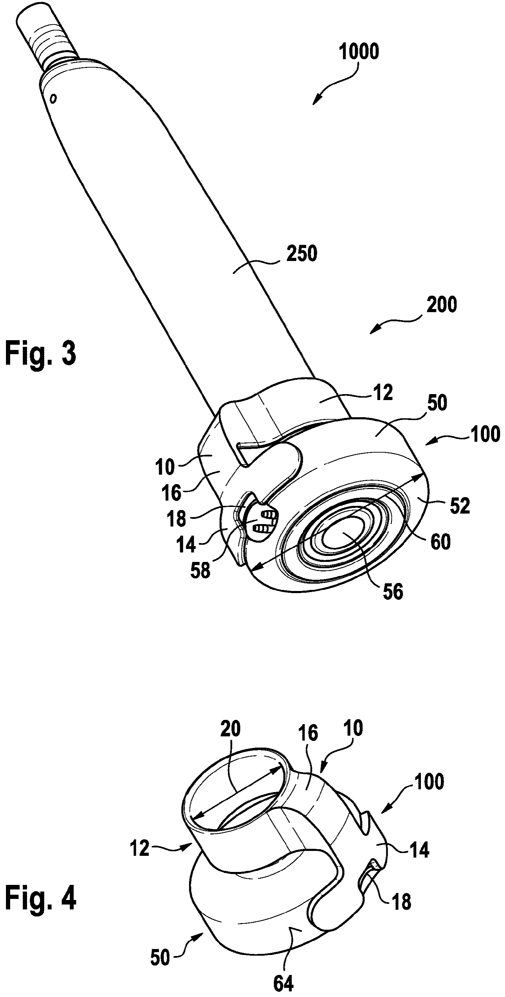

The charging system 100 (see Fig. 4) comprises a charging unit 50 and a holder 10 which is attached to the charging unit 50. The powered driven personal care item 200 can be placed on the charging unit 50 for charging/re-charging purposes and is held by the holder 10 in place.

The charging unit 50 may have the form of a substantially circular disk 52 with a substantially flat surface 54 onto which the powered personal care item 200 can be places. The charging unit 50 may comprise a permanent magnet or a magnetizable element 56 for magnetic interaction with the powered driven personal care item 200. The permanent magnet/ magnetizable element 56 can guide and hold the powered driven personal care item in the proper position, ensuring correct electrical contact between the charging unit and the item's charging contacts.

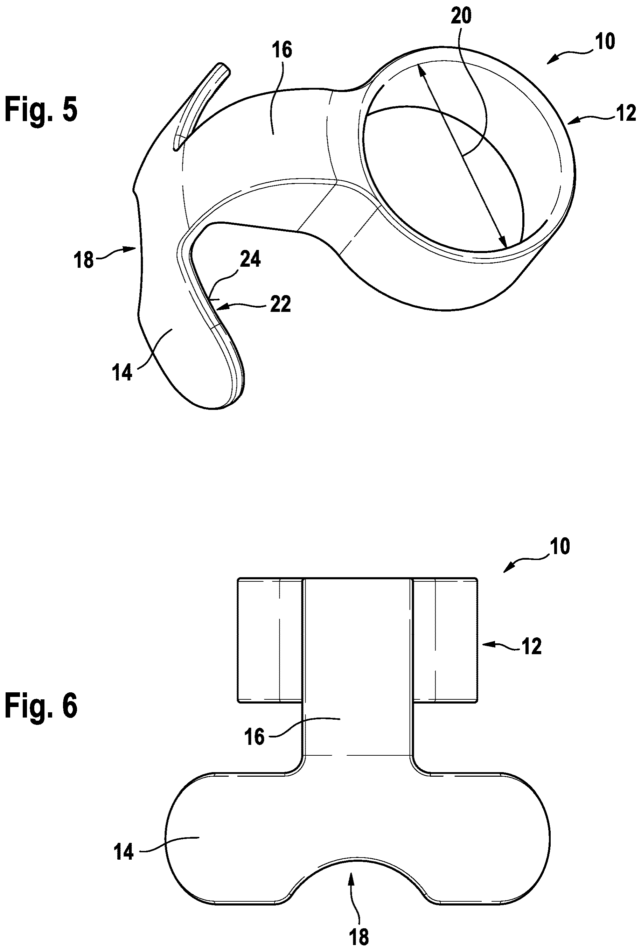

To simplify manufacturing processes, the holder10 (see Figs. 5 and 6) may be unitarily formed as one piece and may be made from a thermoplastic material, e.g. from acrylonitrile butadiene styrene (ABS) or acrylonitrile styrene acrylate (ASA), e.g. by injection-molding. The holder 10 may comprise a substantially circular ring-like structure 12 for receiving a portion of a handle 250 of the powered driven personal care item 200 to hold the item 200 properly in place when placed on the charging unit. The holder 10 further comprises an attachment section 14 for attaching the holder 10 to the charging unit 50. For that purpose, the attachment section 14 may comprise an adhesive 22, e.g. an adhesive tape 22 applied onto an inner surface 24 facing an outer surface 64 of the charging unit 50. The substantially circular ring-like structure 12 of the holder 10 may be connected to the attachment section 14 via a bridge 16. The attachment section 14 may comprise a recess 18 for accommodating and/or receiving a charging cable or a power plug 58 of the charging unit 50.

The substantially circular ring-like structure 12 of the holder 10 may have a diameter 20 that is smaller than the diameter 60 of the charging unit 50 (which may have a substantially circular cross-sectional shape), to ensure that the personal care item is properly centered and positioned within the charging system/on the charging unit, thereby promoting optimal electrical contact between the charging unit and the personal care item's charging contacts for effective recharging. A spacing 62 between the flat surface 54 of the charging unit 50 and the lower surface of the substantially circular ring-like structure 12 may be provided for easy cleaning and maintenance

The charging system 100/unit 1000 according to the present disclosure allows for easy and secure positioning of the personal care item 200/toothbrush 200 on the charger/charging unit 50. The risk of the item 200/toothbrush 200 falling off the substantially flat surface 54 of the charging unit 50 is substantially eliminated.

In the context of this disclosure, the term "substantially" refers to an arrangement of elements or features that, while in theory would be expected to exhibit exact correspondence or behavior, may, in practice embody something slightly less than exact. As such, the term denotes the degree by which a quantitative value, measurement or other related representation may vary from a stated reference without resulting in a change in the basic function of the subject matter at issue.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A holder (10) for a powered driven personal care item (200), the personal care item (200) being placeable on and chargeable via a charging unit (50), the holder (10) being unitarily formed as one piece and being attachable to the charging unit (50) to hold the powered driven personal care item (200) in place when the personal care item (200) is placed on the charging unit (50).

2. The holder (10) according to claim 1, wherein the holder (10) is made from a thermoplastic material.

3. The holder (10) according to any of the preceding claims, wherein the holder (10) is made from acrylonitrile butadiene styrene (ABS) or acrylonitrile styrene acrylate (ASA).

4. The holder (10) according to any of the preceding claims, wherein the holder (10) comprises a substantially circular ring-like structure (12) into which the powered driven personal care item (200) is at least partially insertable.

5. The holder (10) according to any of the preceding claims, wherein the holder (10) comprises an attachment section (14) for attaching the holder (10) to the charging unit (50).

6. The holder (10) according to claim 5, wherein the attachment section (14) comprises an adhesive (22), preferably an adhesive tape (22), for attaching the holder (10) to the charging unit (50).

7. The holder (10) according to claim 5 or 6, wherein the attachment section (14) comprises a recess (18) for accommodating a charging cable or a power plug (58) of the charging unit (50).

8. The holder (10) according to any of claims 5 to 7, wherein the holder (10) comprises a bridge (16), the bridge (16) connecting the substantially circular ring-like structure (14) with the attachment section (14).

9. A charging system (100) comprising a holder (10) according to any of the preceding claims and a charging unit (50).

10. The charging system (100) according to claim 9, wherein the charging unit (50) comprises a substantially flat surface (54) onto which the powered personal care item (200) is placeable.

11. The charging system (100) according to claim 9 or 10, wherein the charging unit (50) has the form of a substantially flat disk (52).

12. The charging system (100) according to any of claims 9 to 11, wherein the charging unit (50) comprises a permanent magnet or a magnetizable element (56) for magnetic interaction with the powered driven personal care item (200).

13. The charging system (100) according to any of claims 9 to 12, wherein a spacing (62) between the charging unit (50) and the substantially circular ring-like structure (12) is provided.

14. The charging system (100) according to any of claims 9 to 13, wherein the charging unit (50) has a substantially circular cross-sectional shape with a diameter (60), and the substantially circular ring-like structure (12) of the holder (10) has a diameter (20) being smaller than the diameter (60) of the charging unit (50).

15. A unit (1000), preferably a display or touch-and-feel unit (1000), comprising a charging system (100) according to any of claims 9 to 14 and a powered driven personal care item (200).
